# EUROPEAN PATENT APPLICATION

(11) **EP 4 227 145 A1**
(43) Date of publication of application: **16.08.2023**
(21) Application number: 20959315.1
(22) Date of filing: 31.10.2020
(51) Int. Cl.: B60L 15/20

(54) **ELECTRIC-VEHICLE TORQUE CONTROL METHOD, APPARATUS, DEVICE, AND STORAGE MEDIUM**

(71) Applicant: Huawei Technologies Co., Ltd., Shenzhen, Guangdong 518129 (CN)
(72) Inventor: HU, Fengwei, Shenzhen, Guangdong 518129 (CN); LIU, Liliang, Shenzhen, Guangdong 518129 (CN); JIA, Haobo, Shenzhen, Guangdong 518129 (CN); FANG, Xuewei, Shenzhen, Guangdong 518129 (CN); FANG, Baojin, Shenzhen, Guangdong 518129 (CN)
(74) Representative: Huawei European IPR
(86) International application number: PCT/CN2020/125673
(87) International publication number: WO 2022/088154

(57) **Abstract**

An electric vehicle torque control method, an apparatus, a device, and a storage medium are provided. According to the torque control method, a controller can quickly output torque information that meets a power requirement of a driver. The torque control method includes: obtaining operating information of an electric vehicle, where the operating information of the electric vehicle includes at least current vehicle speed information of the vehicle, a gradient of an opening degree of an accelerator pedal, and a value of the opening degree of the accelerator pedal, and the gradient of the opening degree of the accelerator pedal is a gradient of the value of the opening degree of the accelerator pedal in a unit time; determining corrected torque information of the electric vehicle based on the operating information and a preset object that is used to represent a relationship between the operating information of the electric vehicle and the corrected torque information, where the object that is used to represent the relationship between the operating information of the electric vehicle and the corrected torque information is determined by using historical operating information of the electric vehicle; and controlling, based on the corrected torque information, a torque output to a motor in the electric vehicle.

## Description

### TECHNICAL FIELD

This application relates to the field of electric vehicles, and in particular, to an electric vehicle torque control method, apparatus, and device, and a storage medium.

### BACKGROUND

In a driving process of an electric vehicle, a motor controller in the electric vehicle is mainly responsible for adjusting a drive torque of a motor based on vehicle information and driver information. The vehicle information mainly includes a vehicle speed, a motor rotational speed, a torque, and the like. The driver information mainly includes an opening degree of an accelerator pedal and a gradient of the accelerator pedal. Driving experience of a driver is directly related to a torque control effect of the electric vehicle. In one aspect, driving experience depends on whether a vehicle may accurately and quickly respond to acceleration and deceleration requirements. In another aspect, the driving experience is related to application scenarios. Drivers in different application scenarios have different power requirements for vehicles. A conventional technology mainly focuses on how to perform precise and fast torque control and adjustment, but essentially, a driver still needs to adapt to a set driving mode set of the electric vehicle.

Currently, to meet power requirements of drivers in a plurality of application scenarios, a torque control manner of the controller is mainly to set three driving modes for the electric vehicle, and each driving mode corresponds to one torque calculation method, to meet requirements of drivers for rotational speeds and accelerations in the plurality of application scenarios. However, in this manner, the driver needs to manually adjust the driving mode, and the driver still needs to adapt to each driving mode.

In conclusion, the existing electric vehicle torque control manner cannot meet power requirements of drivers for a plurality of application scenarios.

### SUMMARY

This application provides an electric vehicle torque control method, an apparatus, a device, and a storage medium, to meet a power requirement of a driver in a plurality of application scenarios.

According to a first aspect, an embodiment of this application provides an electric vehicle torque control method, applied to an electric vehicle. The electric vehicle may include a motor, an accelerator pedal, and a controller. The torque control method may be performed by the controller inside the electric vehicle, and specifically includes the following steps:
obtaining operating information of an electric vehicle, where the operating information of the electric vehicle includes at least current speed information of the vehicle, a gradient of an opening degree of an accelerator pedal, and a value of the opening degree of the accelerator pedal, and the gradient of the opening degree of the accelerator pedal is a gradient of the value of the opening degree of the accelerator pedal in a unit time; determining corrected torque information of the electric vehicle based on the operating information and a preset object that is used to represent a relationship between the operating information of the electric vehicle and the corrected torque information; and controlling, based on the corrected torque information, a torque output to a motor in the electric vehicle. The object that is used to represent the relationship between the operating information of the electric vehicle and the corrected torque information is determined by using historical operating information of the electric vehicle.

According to the foregoing solution, in a process in which a driver drives the electric vehicle, an application scenario of the electric vehicle may be determined based on an operating parameter of the electric vehicle. A difference (namely, the corrected torque information) between basic torque information output by the motor in a current operating mode and torque information required by a driver in the current scenario is determined based on the preset object that is used to represent the relationship between the operating information of the electric vehicle and the corrected torque information. A torque output to the electric vehicle is controlled based on the corrected torque information. In this way, torque information output to the electric vehicle meets a requirement of a driver for the torque in the current scenario.

In a possible design, the vehicle speed information includes some or all of the following: a vehicle speed of the electric vehicle, a rotational speed of the motor, a current torque of the motor, a variable of the torque of the motor, and an acceleration of the electric vehicle. The acceleration is a variation value of the vehicle speed of the electric vehicle in the unit time, and the variable of the torque is a variation value of the current torque in the unit time.

According to the foregoing solution, the application scenario of the electric vehicle may be determined by using the current operating information of the electric vehicle, and the torque information required by the driver may be determined based on the current operating information of the electric vehicle.

In a possible design, the object used to represent the relationship between the operating information of the electric vehicle and the corrected torque information includes a first correspondence between the operating information and target torque information and a second correspondence between the target torque information, basic torque information, and the corrected torque information. The target torque information includes a target torque and a target torque variable. The basic torque information is obtained through calculation in a current driving mode of the electric vehicle based on the value of the opening degree of the accelerator pedal and the gradient of the opening degree of the accelerator pedal, the basic torque information includes a basic torque and a torque variable, and the basic torque variable is a variation value of the basic torque in a unit time.

In the foregoing condition, when the corrected torque information of the electric vehicle is determined based on the operating information and a preset object that is used to represent a relationship between the operating information of the electric vehicle and the corrected torque information, the target torque information may be determined based on the operating information and the first correspondence, and the corrected torque information is determined based on the target torque information, the basic torque information, and the second correspondence.

According to the foregoing solution, the target torque information required by the driver in the current application scenario of the electric vehicle is first determined based on the operating information of the electric vehicle and the first correspondence. The corrected torque information used to compensate the basic torque information is determined based on the target torque information, the basic torque information calculated in the current driving mode of the electric vehicle, and the second correspondence. The basic torque information is compensated, so as to output torque information that meets the requirement of the driver.

In a possible design, the corrected torque information includes a corrected torque and a corrected torque variable. The corrected torque is a difference between the target torque and the current torque, and the corrected torque variable is a difference between the target torque variable and the torque variable.

In the foregoing condition, the controlling, based on the corrected torque information, a torque output to a motor in the electric vehicle specifically includes:
superposing the corrected torque and the basic torque to obtain a first torque; superposing the corrected torque variable and the basic torque variable to obtain first torque variable; and outputting the first torque and the first torque variable to the motor.

According to the foregoing solution, when it is determined that the basic torque output by the electric vehicle in the current driving mode cannot meet the power requirement of the driver, the corrected torque information that represents the difference between the basic torque information and power torque information required by the driver is directly superimposed with the basic torque information for compensation, so that the compensated basic torque information meets the torque requirement of the driver in the current application scenario.

In a possible design, the corrected torque information includes a first corrected torque coefficient and a second corrected torque coefficient. The first corrected torque coefficient is a first ratio of a difference between the target torque and the current torque to the current torque, and the second corrected torque coefficient is a second ratio of a difference between the target torque variable and the torque variable to the torque variable. In the foregoing condition, the controlling, based on the corrected torque information, a torque output to a motor in the electric vehicle specifically includes:
superposing the corrected torque and a torque value corresponding to the first correction coefficient, to obtain a second torque; superposing the corrected torque variable and a torque value corresponding to the second correction coefficient, to obtain a second torque variable; and outputting the second torque and the second torque variable to the motor.

According to the foregoing solution, the corrected torque information is output in a form of a correction coefficient, so that a multiple relationship between the power information required by the driver and the basic torque information can be determined, and the basic torque information is compensated based on the multiple relationship, so that the output torque information after compensation meets the torque requirement of the driver in the current application scenario.

In a possible design, a process of determining, by using the historical operating information, the object that is used to represent the relationship between the operating information of the electric vehicle and the corrected torque information is:
for operating information at each historical moment of a plurality of historical operating parameters, when it is determined that the value of the opening degree of the accelerator pedal at the historical moment changes, recording an operating parameter at the historical moment and a target torque that is of the electric vehicle and that corresponds to preset duration after the historical moment; establishing the first correspondence by using the operating information at each historical moment and the target torque that is of the electric vehicle and that corresponds to the operating information at each historical moment; and establishing the second correspondence by using the target torque that is of the electric vehicle and that corresponds to the operating information at each historical moment and basic torque information corresponding to each moment.

According to the foregoing solution, in a current application scenario, if the driver needs to adjust the vehicle speed of the electric vehicle, the driver may adjust the opening degree of the accelerator pedal. When determining that the torque information required by the driver cannot be obtained by adjusting the opening degree of the accelerator pedal for the first time, the driver needs to adjust the opening degree of the accelerator pedal for a plurality of times until an output torque meets the power requirement at the time when the opening degree of the accelerator pedal is adjusted for the first time. The object that is used to represent the relationship between the operating information of the electric vehicle and the corrected torque information is established based on information that is output by the electric vehicle when the opening degree of the accelerator pedal is adjusted for the first time and torque information that is output after the opening degree of the accelerator pedal is adjusted for the plurality of times. In this way, when the torque calculated in the current driving mode of the electric vehicle does not meet a power requirement of the driver, the established object may be used to accurately compensate for the calculated torque.

In a possible design, the object that is used to represent the relationship between the operating information of the electric vehicle and the corrected torque information includes a model that is used to represent the relationship between the operating information of the electric vehicle and the corrected torque information. In the foregoing condition, the determining corrected torque information of the electric vehicle based on the operating information and the preset object that is used to represent the relationship between the operating information of the electric vehicle and the corrected torque information specifically includes: inputting the operating information into the trained model, and determining the corrected torque information based on an output result.

In the foregoing manner, the trained model may be used to directly output the corrected torque information that is used to correct the current output torque, which is relatively simple in calculation and accelerates calculation.

According to a second aspect, an embodiment of this application provides an electric vehicle torque control apparatus. The torque control apparatus may include an obtaining unit, a determining unit, and a processing unit.

The obtaining unit may be configured to obtain operating information of an electric vehicle, where the operating information of the electric vehicle includes at least current vehicle speed information of the vehicle, a gradient of an opening degree of an accelerator pedal, and the opening degree of the accelerator pedal. The gradient of the opening degree of the accelerator pedal is a gradient of the opening degree of the accelerator pedal in a unit time.

The determining unit may be configured to determine corrected torque information of the electric vehicle based on the operating information and a preset object that is used to represent a relationship between the operating information of the electric vehicle and the corrected torque information, wherein the object that represents the relationship between the operating information of the electric vehicle and the corrected torque information is determined by using historical operating information of the electric vehicle.

The processing unit may be configured to control, based on the corrected torque information, a torque output to a motor in the electric vehicle.

In a possible design, the vehicle speed information includes some or all of the following: a vehicle speed of the electric vehicle, a rotational speed of the motor, a current torque of the motor, a variable of the torque of the motor, and an acceleration of the electric vehicle.

The acceleration is a variation value of the vehicle speed of the electric vehicle in the unit time, and the variable of the torque is a variation value of the current torque in the unit time.

In a possible design, the object used to represent the relationship between the operating information of the electric vehicle and the corrected torque information includes a first correspondence between the operating information and target torque information and a second correspondence between the target torque information, basic torque information, and the corrected torque information. The target torque information includes a target torque and a target torque variable, where the basic torque information is obtained through calculation in a current driving mode of the electric vehicle based on the value of the opening degree of the accelerator pedal and the gradient of the opening degree of the accelerator pedal, the basic torque information includes a basic torque and a torque variable, and the basic torque variable is a variation value of the basic torque in a unit time. The determining unit may be specifically configured to: determine the target torque information based on the operating information and the first correspondence; and determine the corrected torque information based on the target torque information, the basic torque information, and the second correspondence.

In a possible design, the corrected torque information includes corrected torque and a corrected torque variable. The corrected torque is a difference between the target torque and the current torque, and the corrected torque variable is a difference between the target torque variable and the torque variable. The processing unit is specifically configured to: superpose the corrected torque and the basic torque to obtain a first torque; superpose the corrected torque variable and the basic torque variable to obtain a first torque variable; and output the first torque and the first torque variable to the motor.

In a possible design, the corrected torque information includes a first corrected torque coefficient and a second corrected torque coefficient. The first corrected torque coefficient is a first ratio of a difference between the target torque and the current torque to the current torque, and the second corrected torque coefficient is a second ratio of a difference between the target torque variable and the torque variable to the torque variable. The processing unit is specifically configured to: superpose the corrected torque and a torque value corresponding to the first correction coefficient, to obtain a second torque; superpose the corrected torque variable and a torque value corresponding to the second correction coefficient, to obtain a second torque variable; and output the second torque and the second torque variable to the motor.

In a possible design, the processing unit is further configured to use the following steps to establish the object that is used to represent the relationship between the operating information of the electric vehicle and the corrected torque information: for operating information at each historical moment of a plurality of historical operating parameters, when it is determined that the value of the opening degree of the accelerator pedal at the historical moment changes, recording an operating parameter at the historical moment and a target torque that is of the electric vehicle and that corresponds to preset duration after the historical moment; establishing the first correspondence by using the operating information at each historical moment and the target torque that is of the electric vehicle and that corresponds to the operating information at each historical moment; and establishing the second correspondence by using the target torque that is of the electric vehicle and that corresponds to the operating information at each historical moment and basic torque information corresponding to each moment.

In a possible design, the object that is used to represent the relationship between the operating information of the electric vehicle and the corrected torque information includes a model that is used to represent the relationship between the operating information of the electric vehicle and the corrected torque information.

The determining unit is specifically configured to: input the operating information into the trained model, and determine the corrected torque information based on an output result.

According to a third aspect, an embodiment of this application provides a torque control device for an electric vehicle. The torque control device may include one processor coupled to at least one memory.

The at least one processor is configured to execute a computer program or instructions stored in the at least one memory, so that the torque control device performs the method provided in any one of the first aspect or the possible designs of the first aspect.

According to a fourth aspect, an embodiment of this application provides a computer-readable storage medium. The computer-readable storage medium stores instructions. When the instructions run on a computer, the computer is enabled to perform the method provided in any one of the first aspect or the possible designs of the first aspect.

According to a fifth aspect, an embodiment of this application further provides a computer program product including instructions. When the computer program product is run on a computer, the computer is enabled to perform the method provided in any one of the first aspect or the possible designs of the first aspect.

According to a sixth aspect, an embodiment of this application further provides an electric vehicle. The electric vehicle may include a controller, an accelerator pedal, and a motor.

The motor is configured to: receive a control instruction of the controller, and rotate based on the received control instruction. The controller may perform the method provided in any one of the first aspect or the possible designs of the first aspect.

These aspects or other aspects of this application are more readily apparent from the following description of embodiments.

### BRIEF DESCRIPTION OF DRAWINGS

FIG. 1 is a schematic diagram 1 of an architecture of an electric vehicle;
FIG. 2 is a schematic diagram 2 of an architecture of an electric vehicle;
FIG. 3 is a schematic diagram 3 of an architecture of an electric vehicle;
FIG. 4 is a schematic diagram of a driving mode selection manner of an electric vehicle;
FIG. 5 is a schematic diagram 1 of a working principle of an electric vehicle torque control method according to an embodiment of this application;
FIG. 6 is a schematic diagram of a flowchart of an electric vehicle torque control method according to an embodiment of this application;
FIG. 7 is a schematic diagram 2 of a working principle of an electric vehicle torque control method according to an embodiment of this application;
FIG. 8 is a schematic diagram a structure of an electric vehicle torque control apparatus according to an embodiment of this application; and
FIG. 9 is a schematic diagram of a structure of an electric vehicle torque control device according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the description of this application, the term "a plurality of is understood as "at least two". The term "and/or" describes an association relationship for describing associated objects and represents that three relationships may exist. For example, A and/or B may represent the following three cases: Only A exists, both A and B exist, and only B exists. A connection between A and B may indicate two cases: A is directly connected to B, and A is connected to B through C. In addition, in the description of this application, terms such as "first" and "second" are merely used for distinction and description, and shall not be understood as an indication or implication of relative importance or an indication or implication of an order.

The following describes in detail embodiments of this application with reference to the accompanying drawings.

An electric vehicle torque control solution provided in embodiments of this application may be applied to an electric vehicle, and the electric vehicle includes at least an accelerator pedal, a motor, a controller, and wheels. It should be noted that the controller herein in embodiments of this application may be a vehicle controller of the electric vehicle.

The following further describes technical solutions provided in this application with reference to the accompanying drawings and embodiments. It should be understood that a system structure and a service scenario provided in embodiments of this application are mainly intended to explain some possible implementations of the technical solutions in this application, and should not be construed as a unique limitation on the technical solutions in this application. A person of ordinary skill in the art may know that, as a system evolves and an updated service scenario emerges, the technical solutions provided in this application are still applicable to same or similar technical problems.

It should be understood that, in the following description of specific embodiments of the technical solutions provided in embodiments of this application, some repeated parts may not be described again, but it should be considered that the specific embodiments are mutually referenced and may be combined with each other.

In an electric vehicle, when a driver needs to change a current vehicle speed of the electric vehicle, the driver may adjust the vehicle speed of the electric vehicle by changing an opening degree of an accelerator pedal. When detecting that the opening degree of the accelerator pedal changes, a controller outputs a corresponding torque control signal to a motor. Controlled by the torque control signal, the motor adjusts a rotational speed of the motor and drives wheels connected to the motor to rotate, so as to change a rotational speed of the electric vehicle and meet a power requirement of the driver.

During actual use, a detection sensor (not shown) is connected between the accelerator pedal of the electric vehicle and the controller. When detecting that the opening degree of the accelerator pedal changes, the detection sensor outputs the opening degree of the accelerator pedal to the controller.

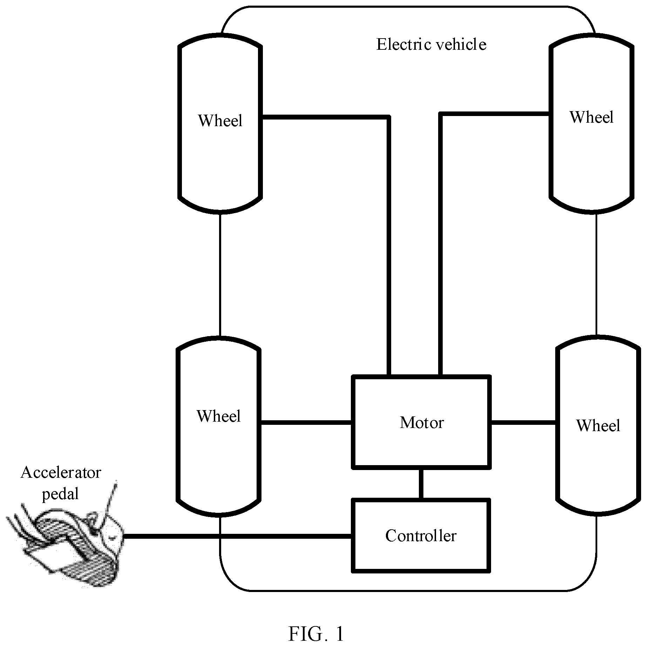

FIG. 1 is a schematic diagram of a structure of an electric vehicle according to an embodiment of this application. As shown in FIG. 1, the electric vehicle includes an accelerator pedal, a motor, a controller, and four wheels. The accelerator pedal and the motor are both connected to the controller, and the four wheels of the electric vehicle are all connected to the motor.

When a driver needs to change a current vehicle speed of the electric vehicle, the driver may change an opening degree of the accelerator pedal. When determining that the opening degree of the accelerator pedal changes, the controller outputs a corresponding torque control signal to the motor. Controlled by the torque control signal, the motor adjusts a rotational speed of the motor and drives four wheels connected to the motor to rotate, so as to change a vehicle speed of the electric vehicle.

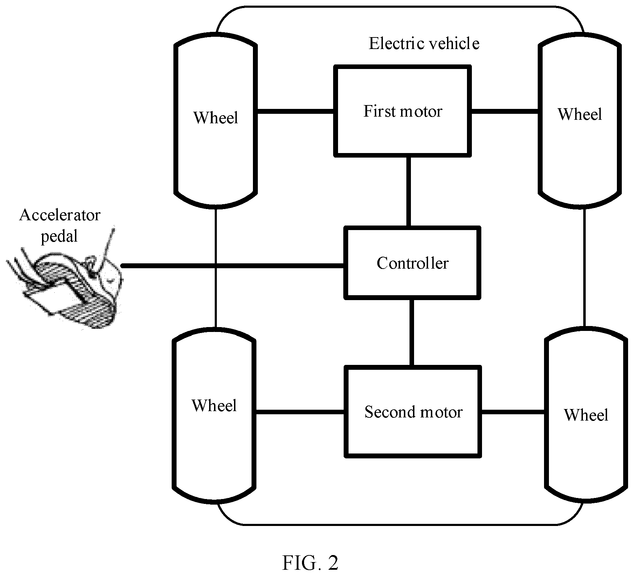

FIG. 2 is a schematic diagram of another structure of an electric vehicle according to an embodiment of this application. As shown in FIG. 2, the electric vehicle includes an accelerator pedal, a first motor, a second motor, a controller, and four wheels. The accelerator pedal, the first motor, and the second motor are all connected to the controller, two wheels on a front side of the electric vehicle are connected to the first motor, and two wheels on a rear side of the electric vehicle are connected to the second motor.

When a driver needs to change a current vehicle speed of the electric vehicle, the driver may change an opening degree of the accelerator pedal. When determining that the opening degree of the accelerator pedal changes, the controller outputs a first torque control signal to the first motor, and outputs a second torque control signal to the second motor. Respectively controlled by the first torque control signal and the second torque control signal, the first motor and the second motor adjust rotational speeds of the motors, and drive vehicle wheels connected to the motors to rotate, so as to change the vehicle speed of the electric vehicle.

In specific implementation, when the first torque control signal and the second torque control signal are configured, a value in the first torque control signal may be the same as a value in the second torque control signal, or values in the first torque control signal and the second torque control signal may be configured based on weight distribution and wheel location distribution of the electric vehicle.

It should be understood that although only two configuration manners of the first torque control signal and the second torque control signal are shown in this embodiment of this application, configuration manners of the first torque control signal and the second torque control signal in this embodiment of this application are not limited thereto.

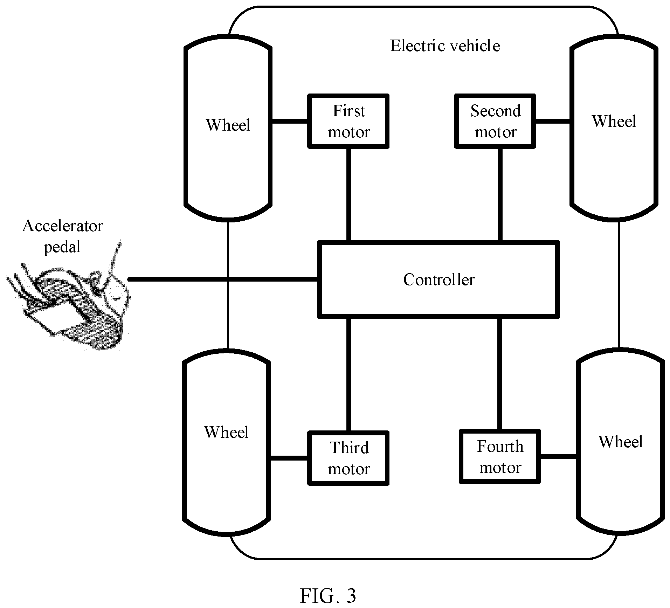

FIG. 3 is a schematic diagram of another structure of an electric vehicle according to an embodiment of this application. As shown in FIG. 3, the electric vehicle includes an accelerator pedal, a first motor, a second motor, a third motor, a fourth motor, a controller, and four wheels. The accelerator pedal, the first motor, the second motor, the third motor, and the fourth motor are all connected to the controller, and the first motor, the second motor, the third motor, and the fourth motor are connected to the four wheels in a one-to-one correspondence.

When a driver needs to change a current vehicle speed of the electric vehicle, the driver may change an opening degree of the accelerator pedal. When determining that the opening degree of the accelerator pedal changes, the controller outputs a first torque control signal to the first motor, outputs a second torque control signal to the second motor, outputs a third torque control signal to the third motor, and outputs a fourth torque control signal to the fourth motor. After receiving corresponding torque control signals, the first motor, the second motor, the third motor, and the fourth motor adjust rotational speeds of the first motor, the second motor, the third motor, and the fourth motor, and drive vehicle wheels connected to the motors to rotate, so as to change the vehicle speed of the electric vehicle.

In the electric vehicle provided in embodiments of this application, the electric vehicle may further include a control panel, a housing, and a mechanical connection component connected between the motor and the wheel. The driver may control, by touching a corresponding button on the control panel or adjusting a parameter value on the control panel, connection and disconnection of another electrical device disposed inside the electric vehicle and adjust a torque value output to the motor, so as to improve intelligence of the electric vehicle.

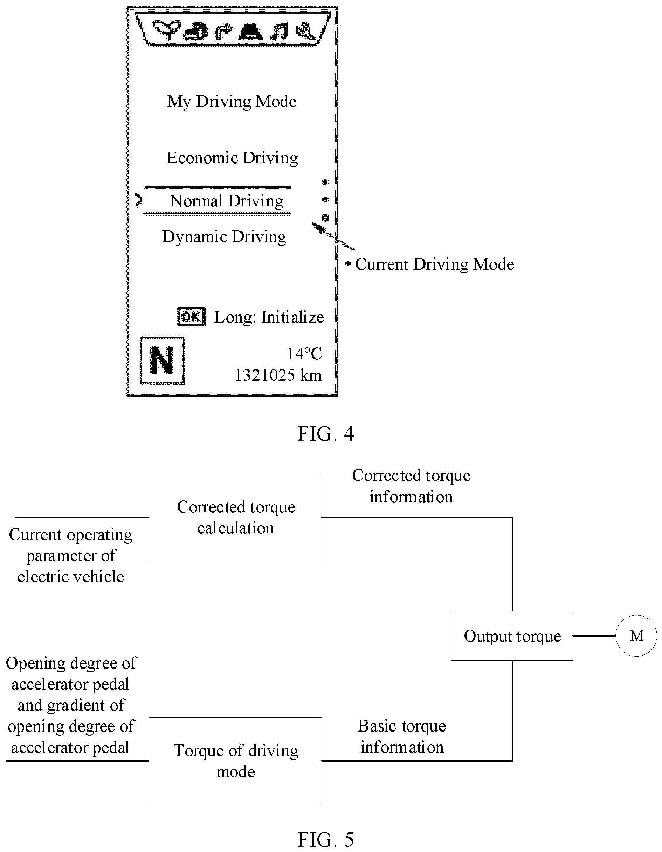

In a current torque control manner of an electric vehicle, a torque output to a motor is mainly controlled by setting one or more driving modes. For example, as shown in FIG. 4, the electric vehicle may include the following three driving modes: an economic mode, a normal driving mode, and a dynamic driving mode. A driver may touch a driving mode button on a control panel to select a corresponding driving mode. In each driving mode, a fixed linear function relationship is presented between an opening degree of the accelerator pedal and the torque of the motor. When it is detected that the driver changes the opening degree of the accelerator pedal, a corresponding output torque is directly obtained through calculation based on the linear function relationship, and a value of the output torque obtained through calculation is output to the motor.

During specific implementation, it takes a corresponding time to adjust a current torque of the electric vehicle to the output torque corresponding to a variation of the accelerator pedal. Consequently, when a current vehicle speed of the electric vehicle needs to be adjusted, the torque output by the controller to the motor mainly includes two parameters: a basic torque and a torque variable (an acceleration of the electric vehicle). A value of the torque variable may be determined based on a difference between the basic torque and the output torque and a gradient of the opening degree of the accelerator pedal.

However, during actual use, when the electric vehicle is in different application scenarios (for example, different rotational speeds), and rotational speeds of the electric vehicle required when the driver adjusts a same opening degree of the accelerator pedal may be different. However, the foregoing torque control manner by adjusting a driving mode of the electric vehicle cannot meet power requirements of the driver in different application scenarios, and the driver needs to adjust the opening degree of the accelerator pedal for a plurality of times to output a torque that meets the requirement.

In view of this, embodiments of this application provide an electric vehicle torque control method, apparatus, device, and a storage medium. The method may be applied to the electric vehicle provided in embodiments, so that when torque information output in a driving mode of an electric vehicle does not meet a power requirement of a driver, torque information obtained through calculation in an existing driving mode is compensated, so that power requirements of the driver in different application scenarios are quickly output, and user experience of the driver is improved.

Specifically, a compensation manner of the torque control solution of the electric vehicle provided in this embodiment of this application may be represented by using a structural block diagram. As shown in FIG. 5, when it is detected that the opening degree of the accelerator pedal of the electric vehicle changes, basic torque information of the electric vehicle is calculated in a current driving mode based on the opening degree of the accelerator pedal and the gradient of the opening degree of the accelerator pedal. The torque control solution of the electric vehicle provided in this application is: calculating, based on a current operating parameter of the electric vehicle, corrected torque information used to perform torque compensation on the basic torque information, and controlling and outputting the basic torque information and the corrected torque information control torque to the motor, so as to output a torque that meets a power requirement of the driver, and prevent the driver from adjusting the opening degree of the accelerator pedal for a plurality of times.

The following further exemplifies, by using an embodiment, the electric vehicle torque control method provided in this application.

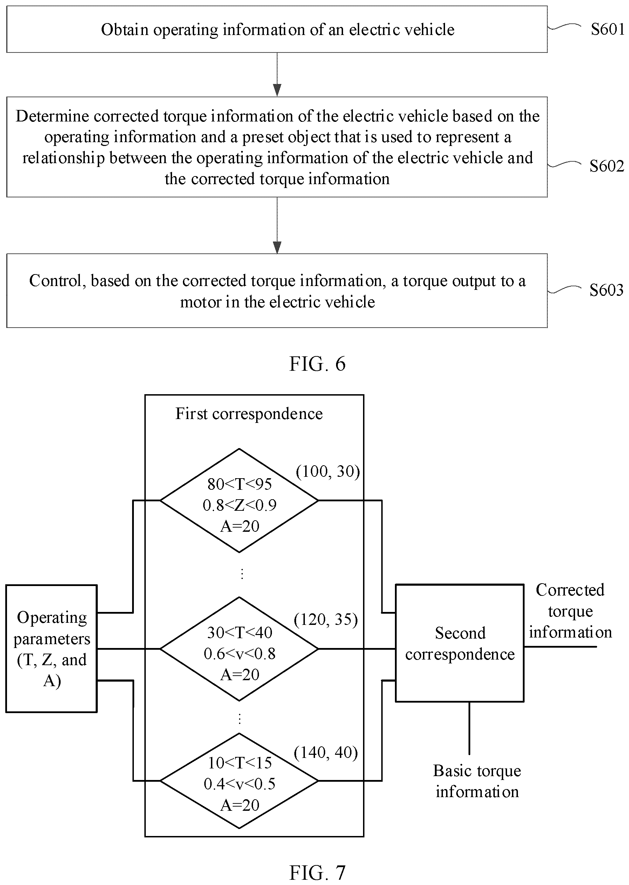

FIG. 6 is a schematic flowchart of an electric vehicle torque control method according to an embodiment of this application. The electric vehicle torque control method may be performed by a controller in an electric vehicle. As shown in FIG. 6, the electric vehicle torque control method mainly includes the following steps.

S601: Obtain operating information of an electric vehicle. The operating information of the electric vehicle includes at least current vehicle speed information of the electric vehicle, a gradient of an opening degree of an accelerator pedal, and the opening degree of the accelerator pedal. The gradient of the opening degree of the accelerator pedal is a gradient of the opening degree of the accelerator pedal in a unit time.

For example, the operating information of the electric vehicle may be obtained by a detection apparatus disposed in the electric vehicle. When no detection apparatus is disposed in the electric vehicle, the operating information of the electric vehicle may be obtained by an external detection device of the electric vehicle.

Specifically, the current vehicle speed information of the electric vehicle may include some or all of the following information: a vehicle speed of the electric vehicle, a rotational speed of a motor, a current torque of the motor, a variable of the torque of the motor, and an acceleration of the electric vehicle. The acceleration is a variation value of the vehicle speed of the electric vehicle in the unit time, and the variable of the torque is a variation value of the current torque in the unit time.

In actual use, some or all parameters of the operating information provided above may be used to participate in calculation of corrected torque information. For example, the motor is connected to a wheel by using a mechanical connection component. The motor rotates and changes rotation of the mechanical connection component, to drive the wheel to rotate. When abrasion of the mechanical connection component between the motor and the wheel is ignored, a function relationship is presented between the rotational speed of the motor and a rotational speed of the electric vehicle. Therefore, in an application scenario in which a requirement for output torque accuracy is not high, one of two parameters may be used to participate in calculation of the corrected torque information.

S602: Determine the corrected torque information of the electric vehicle based on the operating information and a preset object that is used to represent a relationship between the operating information of the electric vehicle and the corrected torque information. The object representing the relationship between the operating information of the electric vehicle and the corrected torque information is determined by using historical operating information of the electric vehicle.

In an example, the corrected torque information may be but is not limited to a corrected torque and a corrected torque variable. The corrected torque variable is a difference between a basic torque and a target torque required by a driver in an application scenario, and the corrected torque variable is a difference between a basic torque variable and a target torque variable required by the driver in the application scenario. The basic torque and the basic torque variable are basic torque information obtained through calculation in the current driving mode of the electric vehicle based on the opening degree of the accelerator pedal and the gradient of an opening degree of a driving pedal.

In an example, the corrected torque information may be but is not limited to a first correction coefficient and a second correction coefficient. The first correction coefficient is a ratio of a difference between a basic torque and a target torque required by a driver in an application scenario to the basic torque, and the second correction coefficient is a ratio of a difference between a basic torque variable and a target torque variable required by the driver in the application scenario to the torque variable.

S603: Control, based on the corrected torque information, a torque output to the motor in the electric vehicle.

In this embodiment of this application, after the corrected torque information is determined, the corrected torque information may be used to directly compensate for the basic torque information output by a current driving model of the electric vehicle, and compensated torque information is output to the motor in the electric vehicle.

For example, if the corrected torque information includes the corrected torque and the corrected torque variable, the corrected torque may be superimposed on the basic torque calculated in the current driving model of the electric vehicle to obtain a first torque, and the corrected torque variable may be superimposed on the basic torque variable calculated in the current driving model of the electric vehicle to obtain a first torque variable, and the first torque and the first torque variable are output to the motor, so that the output torque information meets a power requirement of the driver in the current application scenario.

For example, if the corrected torque information includes the first correction coefficient and the second correction coefficient, the basic torque may be superimposed on a torque value corresponding to the first correction coefficient to obtain a second torque, and the basic torque variable may be superimposed on a torque value corresponding to the second correction coefficient to obtain a second torque variable, and the second torque and the second torque variable are output to the motor, so that the output torque information meets a power requirement of the driver in the current application scenario.

In this embodiment of this application, to simplify calculation of the controller and quickly respond to a power requirement of the driver, the corrected torque information may further include target torque information. After the corrected torque information is determined, the target torque information is directly output to the motor.

During specific implementation, there may be two specific implementations of the object that is used to represent the relationship between the operating information of the electric vehicle and the corrected torque information.

The following further exemplifies, by using the following embodiments, two implementations of the object that is provided in this embodiment of this application and that is used to represent the relationship between the operating information of the electric vehicle and the corrected torque information.

Embodiment 1: The object that is used to represent the relationship between the operating information of the electric vehicle and the corrected torque information is a trained model that represents the relationship between the operating information of the electric vehicle and the corrected torque information.

When the corrected torque information is determined by using the foregoing model, the operating information of the electric vehicle may be directly input into the trained corresponding model that represents the relationship between the operating information of the electric vehicle and the corrected torque information, and the trained model may directly output the corrected torque information.

The foregoing model provided in this embodiment of this application is obtained by training by using a historical operating parameter of the electric vehicle. The following describes in detail a process of establishing the corresponding model that represents the relationship between the operating information of the electric vehicle and the corrected torque information.

First, operating parameters of the electric vehicle at a plurality of historical moments are obtained, and a corresponding label is configured for each of the plurality of operating parameters at a historical moment when the opening degree of the accelerator pedal changes. Information in the label is target torque information corresponding to the operating parameter at the historical moment.

It should be noted that, in this embodiment of this application, the operating parameter at the historical moment that is used to determine the foregoing model may be but is not limited to historical operating data stored when the driver controls the electric vehicle to be in a dynamic adjustment mode.

During specific implementation, the target torque information corresponding to the operating parameter at the historical moment is determined by using a torque that is output by the electric vehicle after preset duration after a historical moment corresponding to each operating parameter at the historical moment, the opening degree of the accelerator pedal at the historical moment, and the gradient of the opening degree of the accelerator pedal at the historical moment.

It should be noted that, when the electric vehicle is in the current driving mode, if the driver needs to adjust the current rotational speed of the electric vehicle, the driver may directly adjust the opening degree of the accelerator pedal. If the torque information output to the motor does not meet the power requirement of the driver, the driver changes, within preset duration by adjusting the opening degree of the accelerator pedal for a plurality of times, the torque information output to the motor, until the torque information output to the motor after the preset duration meets the torque information required by the driver when the opening degree of the accelerator pedal is adjusted for the first time. When the torque information output after the preset duration at the historical moment meets the output torque information required by the driver when the opening degree of the accelerator pedal is adjusted for the first time, the electric vehicle is already in a stable state. Therefore, corresponding adjustment time when the output torque information is adjusted to may be determined based on a historical moment when the opening degree of the accelerator pedal is adjusted for the first time and the gradient of the opening degree of the accelerator pedal, and a target torque and a target torque variable that may be given in a current application scenario of the electric vehicle are calculated based on the adjustment time and the output torque.

In specific implementation, the electric vehicle may further include a memory. The historical operating information of the electric vehicle may be stored in the memory in the electric vehicle, or may be stored in a memory of an external device that communicates with the electric vehicle.

The corresponding model that represents the relationship between the operating information of the electric vehicle and the corrected torque information is trained by using the obtained operating parameters at the plurality of historical moments and labels corresponding to the plurality of operating parameters at the historical moments, and parameter in the corresponding model that represents the relationship between the operating information of the electric vehicle and the corrected torque information are adjusted based on an output result and information included in the label. When the operating parameter at the historical moment is input to the corresponding model that represents the relationship between the operating information of the electric vehicle and the corrected torque information, and the output result is consistent with label content corresponding to the operating parameter at the historical moment, it is determined that the corresponding model that represents the relationship between the operating information of the electric vehicle and the corrected torque information has been trained.

In actual use, road conditions of the electric vehicle corresponding to operating parameters at each historical moment are different. Therefore, when the corresponding model that represents the relationship between the operating information of the electric vehicle and the corrected torque information is trained by using the foregoing historical operating parameters, a specific error may exist between the model output by training and the target torque information in the label. A specific error value may be determined based on an application scenario of the electric vehicle and a requirement of the driver for accuracy of the corresponding model that represents the relationship between the operating information of the electric vehicle and the corrected torque information.

During actual use, a driving style of the driver used in different periods may change, and a driver may be changed. To ensure user experience of the driver, the model that is used to represent the relationship between the operating information of the electric vehicle and the corrected torque information needs to be periodically retrained, and a training period of the model may be set based on an actual requirement.

In an example, when the quantity of historical operating parameters of the electric vehicle that exist in the memory exceeds a preset threshold, the model that is used to represent the relationship between the operating information of the electric vehicle and the corrected torque information is retrained, data stored in the memory is cleared, and historical operating parameters of the electric vehicle are re-stored.

Embodiment 2: The object that is used to represent the relationship between the operating information of the electric vehicle and the corrected torque information includes a first correspondence between the operating information and target torque information and a second correspondence between the target torque information, basic torque information, and the corrected torque information.

When the corrected torque information of the electric vehicle is determined based on the operating information and a preset object that is used to represent a relationship between the operating information of the electric vehicle and the corrected torque information, the target torque information may be determined based on the operating information and the first correspondence, and the corrected torque information is determined based on the target torque information and the second correspondence.

In actual use, because the operating information may include a plurality of operating parameters, the first correspondence may include a correspondence between a plurality of operating parameter intervals and target torque information. As shown in FIG. 7, when values of the plurality of obtained operating parameters are within a plurality of operating parameter intervals corresponding to first corrected torque information, the target torque information corresponding to the current operating parameter is the first torque information.

In specific implementation, the correspondence among the target torque information, the operating information, and the corrected torque information may be a function among the target torque, the operating information, and the corrected torque information.

In an example, if the corrected torque information includes the corrected torque and the corrected torque variable, when the target torque information is determined, a subtraction operation is performed on the target torque and the basic torque in the target torque information to obtain a first difference, where the first difference is the corrected torque. In addition, a subtraction operation is performed on the target torque variable in the target torque information and the basic torque variable to obtain a second difference, where the second difference is a corrected torque variable. The basic torque information calculated by using the current operating model of the motor is directly compensated based on the corrected torque and the corrected torque variable. A compensated torque is output to the motor, that is, torque information that meets a requirement of the driver is output to the motor.

In another example, if the corrected torque information includes a first corrected torque coefficient and a second corrected torque coefficient, when the target torque information is determined, a ratio of the first difference to the basic torque is used as the first corrected torque coefficient, and a ratio of the second difference to the basic torque variable is used as the second corrected torque coefficient.

For example, the operating information of the electric vehicle includes the current torque of the electric vehicle, the gradient of the opening degree of the accelerator pedal, and the opening degree of the accelerator pedal, and the corrected torque information is the corrected torque and the corrected torque variable. With reference to FIG. 7, a process of determining the corrected torque information in Embodiment 2 of this application is further described.

First, the detection apparatus is used to obtain a current torque T, an opening degree A of the accelerator pedal, and a gradient Z of the opening degree of the accelerator pedal of the electric vehicle. For example, the current torque T of the motor is 68, the opening degree A of the accelerator pedal is 20, and an opening degree Z of the accelerator pedal in the unit time is 0.45. The obtained information is output to the correspondence between the plurality of operating parameters and the target torque information in the first correspondence. When it is determined that all current operating parameters are in an operating parameter range corresponding to a target torque 120 and a target torque variable 35, the target torque 120 and the target torque variable 35 are output to the second correspondence.

A basic torque 80 and a basic torque variable 20 are calculated in the current driving mode of the electric vehicle by using the opening degree A of the accelerator pedal and the opening degree Z of the accelerator pedal in the unit time, where A is 20, and Z is 0.45, and the basic torque 80 and the basic torque variable 20 are output to the second correspondence. A subtraction operation is performed by using the target torque 120 and the basic torque 80 to obtain a corrected torque 40, and a subtraction operation is performed by using the target torque variable 35 and the basic torque variable 20 to obtain a corrected torque variable 15.

In this embodiment of this application, if the corrected torque information includes the first corrected torque coefficient and the second corrected torque information, when it is determined that the basic torque is 80 and the target torque value is 120, a subtraction operation is performed on the target torque 120 and the basic torque 80 to obtain a first difference 40, and a subtraction operation is performed on the target torque variable 35 and the basic torque variable 20 to obtain a second difference 15. A division operation is performed on the first difference 50 and the basic torque to obtain a first correction coefficient 0.5, and a division operation is performed on the second difference 15 and the basic torque variable 20, to obtain a first correction coefficient 0.75.

It should be understood that although only two implementations of corrected torque information are shown in embodiments of this application, configuration manners of a first torque control signal and a second torque control signal in embodiments of this application are not limited thereto.

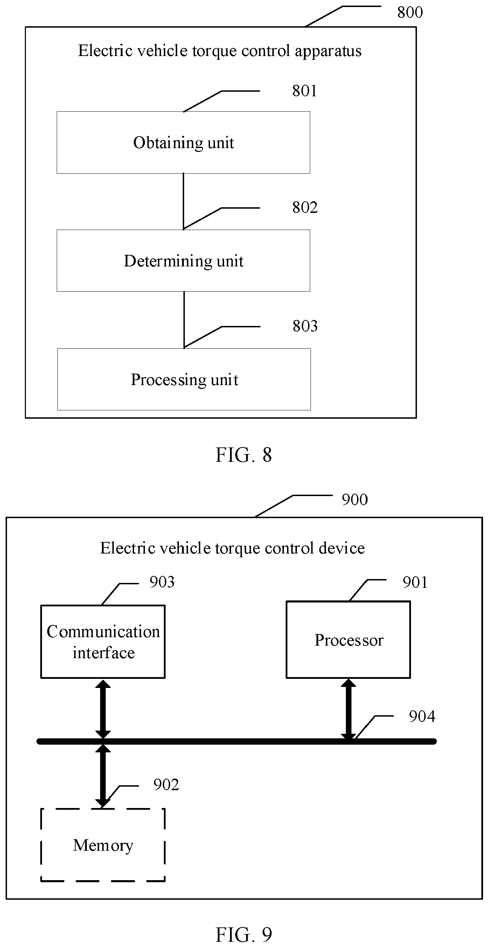

An embodiment of this application further provides an electric vehicle torque control apparatus. FIG. 8 is a schematic structural block diagram of an electric vehicle torque control apparatus 800 according to an embodiment of this application. The electric vehicle torque control apparatus 800 may implement functions or steps implemented by a controller in the foregoing method embodiments. The torque control apparatus of the electric vehicle may be but is not limited to an obtaining unit 801, a determining unit 802, and a processing unit 803. Optionally, the apparatus may further include a storage unit, and the storage unit may store historical operating information of an electric vehicle.

Specifically, the obtaining unit 801 may be configured to obtain operating information of the electric vehicle. The operating information of the electric vehicle includes at least current vehicle speed information of the vehicle, a gradient of an opening degree of an accelerator pedal, and a value of the opening degree of the accelerator pedal. The gradient of the opening degree of the accelerator pedal is a gradient of the value of the opening degree of the accelerator pedal in a unit time. The determining unit 802 may be configured to determine the corrected torque information of the electric vehicle based on the operating information and a preset object that is used to represent a relationship between the operating information of the electric vehicle and the corrected torque information. The processing unit 803 may be configured to control, based on the corrected torque information, a torque output to a motor in the electric vehicle. The object representing the relationship between the operating information of the electric vehicle and the corrected torque information is determined by using historical operating information of the electric vehicle.

In a possible design, the vehicle speed information includes some or all of the following: a vehicle speed of the electric vehicle, a rotational speed of the motor, a current torque of the motor, a variable of the torque of the motor, and an acceleration of the electric vehicle. The acceleration is a variation value of the vehicle speed of the electric vehicle in the unit time, and the variable of the torque is a variation value of the current torque in the unit time.

In a possible design, the object used to represent the relationship between the operating information of the electric vehicle and the corrected torque information includes a first correspondence between the operating information and target torque information and a second correspondence between the target torque information, basic torque information, and the corrected torque information. The target torque information includes a target torque and a target torque variable, where the basic torque information is obtained through calculation in a current driving mode of the electric vehicle based on the value of the opening degree of the accelerator pedal and the gradient of the opening degree of the accelerator pedal, the basic torque information includes a basic torque and a torque variable, and the basic torque variable is a variation value of the basic torque in a unit time. The determining unit 802 may be specifically configured to: determine the target torque information based on the operating information and the first correspondence; and determine the corrected torque information based on the target torque information, the basic torque information, and the second correspondence.

In a possible design, the corrected torque information includes a corrected torque and a corrected torque variable. The corrected torque is a difference between the target torque and the current torque, and the corrected torque variable is a difference between the target torque variable and the torque variable. The processing unit 803 may be specifically configured to: superpose the corrected torque and the basic torque to obtain first torque; superpose the corrected torque variable and the basic torque variable to obtain first torque variable; and output the first torque and the first torque variable to the motor.

In a possible design, the corrected torque information includes a first corrected torque coefficient and a second corrected torque coefficient. The first corrected torque coefficient is a first ratio of a difference between the target torque and the current torque to the current torque, and the second corrected torque coefficient is a second ratio of a difference between the target torque variable and the torque variable to the torque variable. The processing unit 803 is specifically configured to: superpose the corrected torque and a torque value corresponding to the first correction coefficient, to obtain a second torque; superpose the corrected torque variable and a torque value corresponding to the second correction coefficient, to obtain a second torque variable; and output the second torque and the second torque variable to the motor.

In a possible design, the processing unit 803 may be further configured to: for operating information at each historical moment of a plurality of historical operating parameters, when it is determined that the value of the opening degree of the accelerator pedal at the historical moment changes, record an operating parameter at the historical moment and a target torque that is of the electric vehicle and that corresponds to preset duration after the historical moment; establish the first correspondence by using the operating information at each historical moment and the target torque that is of the electric vehicle and that corresponds to the operating information at each historical moment; and establish the second correspondence by using the target torque that is of the electric vehicle and that corresponds to the operating information at each historical moment and basic torque information corresponding to each moment.

In a possible design, the object that is used to represent the relationship between the operating information of the electric vehicle and the corrected torque information includes a model that is used to represent the relationship between the operating information of the electric vehicle and the corrected torque information. The determining unit 802 is specifically configured to: input the operating information into the trained model, and determine the corrected torque information based on an output result.

An embodiment of this application further provides an electric vehicle torque control device. FIG. 9 shows an electric vehicle torque control device 900 provided in this embodiment of this application. The electric vehicle torque control device 900 may be a controller in an electric vehicle provided in embodiments of this application, and may implement functions of the controller in the method provided in embodiments of this application. The electric vehicle torque control device 900 may be a chip system. In this embodiment of this application, the chip system may include a chip, or may include a chip and another discrete component.

In specific implementation, the torque control device 900 of the electric vehicle includes at least one processor 901, configured to implement or support the electric vehicle torque control device 900 in implementing a function of the method provided in embodiments of this application. For details, refer to detailed description in the method example. Details are not described herein again.

The electric vehicle torque control device 900 may further include at least one memory 902, configured to store program instructions and/or data. The memory 902 is coupled to the processor 901. The coupling in this embodiment of this application may be an indirect coupling or a communication connection between apparatuses, units, or modules in an electrical form, a mechanical form, or another form, and is used for information exchange between the apparatuses, the units, or the modules. The processor 901 may cooperate with the memory 902. The processor 901 may execute the program instructions and/or the data stored in the memory 902, so that the electric vehicle torque control device implements a corresponding method. At least one of the at least one memory may be included in the processor. It should be noted that the memory 902 is not mandatory, and therefore is shown by using a dashed line in FIG. 9.

The electric vehicle torque control device 900 may further include a communication interface 903, configured to communicate with another device through a transmission medium, so that an apparatus in the electric vehicle torque control device 900 may communicate with the another device. For example, the another device may be a control panel or a terminal. The processor 901 may send and receive data by using the communication interface 903. The communication interface 903 may be specifically a transceiver.

In this embodiment of this application, a specific connection medium between the communication interface 903, the processor 901, and the memory 902 is not limited. In this embodiment of this application, the memory 902, the processor 901, and the communication interface 903 are connected by using a bus 904 in FIG. 9. The bus is represented by using a thick line in FIG. 9. A connection manner between other components is merely an example for description, and is not limited thereto. Buses may be classified into an address bus, a data bus, a control bus, and the like. For ease of representation, only one thick line is used to represent the bus in FIG. 9, but this does not mean that there is only one bus or only one type of bus.

An embodiment of this application further provides a computer program product, including instructions. When the instructions are run on a computer, the computer performs the method performed by a controller in FIG. 6.

An embodiment of this application further provides an electric vehicle. The electric vehicle may include a controller, a motor, and an accelerator pedal.

The motor is configured to receive a control instruction of the controller, and rotate based on the received control instruction. The controller is configured to perform the method performed by the controller in FIG. 6.

Optionally, the electric vehicle may further include a housing, a control panel, and a power supply.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product in this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that may instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing one or more specific functions in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An electric vehicle torque control method, comprising:
obtaining operating information of an electric vehicle, wherein the operating information of the electric vehicle comprises at least current vehicle speed information of the vehicle, a gradient of an opening degree of an accelerator pedal, and a value of the opening degree of the accelerator pedal, and the gradient of the opening degree of the accelerator pedal is a gradient of the value of the opening degree of the accelerator pedal in a unit time;
determining corrected torque information of the electric vehicle based on the operating information and a preset object that is used to represent a relationship between the operating information of the electric vehicle and the corrected torque information, wherein the object that is used to represent the relationship between the operating information of the electric vehicle and the corrected torque information is determined by using historical operating information of the electric vehicle; and
controlling, based on the corrected torque information, a torque output to a motor in the electric vehicle.

2. The method according to claim 1, wherein the vehicle speed information comprises some or all of the following: a vehicle speed of the electric vehicle, a rotational speed of the motor, a current torque of the motor, a variable of the torque of the motor, and an acceleration of the electric vehicle; and
the acceleration is a variation value of the vehicle speed of the electric vehicle in a unit time, and the variable of the torque is a variation value of the current torque in the unit time.

3. The method according to claim 2, wherein the object that is used to represent the relationship between the operating information of the electric vehicle and the corrected torque information comprises a first correspondence between the operating information and target torque information and a second correspondence between the target torque information, basic torque information, and the corrected torque information, and the target torque information comprises a target torque and a target torque variable, wherein the basic torque information is obtained through calculation in a current driving mode of the electric vehicle based on the value of the opening degree of the accelerator pedal and the gradient of the opening degree of the accelerator pedal, the basic torque information comprises a basic torque and a torque variable, and the basic torque variable is a variation value of the basic torque in a unit time; and
the determining corrected torque information of the electric vehicle based on the operating information and a preset object that is used to represent a relationship between the operating information of the electric vehicle and the corrected torque information comprises:
determining the target torque information based on the operating information and the first correspondence; and
determining the corrected torque information based on the target torque information, the basic torque information, and the second correspondence.

4. The method according to claim 3, wherein the corrected torque information comprises a corrected torque and a corrected torque variable, the corrected torque is a difference between the target torque and the current torque, and the corrected torque variable is a difference between the target torque variable and the torque variable; and
the controlling, based on the corrected torque information, a torque output to a motor in the electric vehicle comprises:
superposing the corrected torque and the basic torque to obtain a first torque;
superposing the corrected torque variable and the basic torque variable to obtain a first torque variable; and
outputting the first torque and the first torque variable to the motor.

5. The method according to claim 3, wherein the corrected torque information comprises a first corrected torque coefficient and a second corrected torque coefficient, the first corrected torque coefficient is a first ratio of a difference between the target torque and the current torque to the current torque, and the second corrected torque coefficient is a second ratio of a difference between the target torque variable and the torque variable to the torque variable; and
the controlling, based on the corrected torque information, a torque output to a motor in the electric vehicle comprises:
superposing the corrected torque and a torque value corresponding to the first correction coefficient, to obtain second torque;
superposing the corrected torque variable and a torque value corresponding to the second correction coefficient, to obtain a second torque variable; and
outputting the second torque and the second torque variable to the motor.

6. The method according to any one of claims 3 to 5, wherein a process of determining, by using the historical operating information, the object that is used to represent the relationship between the operating information of the electric vehicle and the corrected torque information is:
for operating information at each historical moment of a plurality of historical operating parameters, when it is determined that the value of the opening degree of the accelerator pedal at the historical moment changes, recording an operating parameter at the historical moment and target torque that is of the electric vehicle and that corresponds to preset duration after the historical moment;
establishing the first correspondence by using the operating information at each historical moment and the target torque that is of the electric vehicle and that corresponds to the operating information at each historical moment; and
establishing the second correspondence by using the target torque that is of the electric vehicle and that corresponds to the operating information at each historical moment and basic torque information corresponding to each moment.

7. The method according to claim 1 or 2, wherein the object that is used to represent the relationship between the operating information of the electric vehicle and the corrected torque information comprises a model that is used to represent the relationship between the operating information of the electric vehicle and the corrected torque information; and
the determining corrected torque information of the electric vehicle based on the operating information and a preset object that is used to represent a relationship between the operating information of the electric vehicle and the corrected torque information comprises:
inputting the operating information into the trained model, and determining the corrected torque information based on an output result.

8. An electric vehicle torque control apparatus, comprising:
an obtaining unit, configured to obtain operating information of an electric vehicle, wherein the operating information of the electric vehicle comprises at least current vehicle speed information of the vehicle, a gradient of an opening degree of an accelerator pedal, and a value of the opening degree of the accelerator pedal, and the gradient of the opening degree of the accelerator pedal is a gradient of the value of the opening degree of the accelerator pedal in a unit time;
a determining unit, configured to determine corrected torque information of the electric vehicle based on the operating information and a preset object that is used to represent a relationship between the operating information of the electric vehicle and the corrected torque information, wherein the object that represents the relationship between the operating information of the electric vehicle and the corrected torque information is determined by using historical operating information of the electric vehicle; and
a processing unit, configured to control, based on the corrected torque information, a torque output to a motor in the electric vehicle.

9. The apparatus according to claim 8, wherein the vehicle speed information comprises some or all of the following: a vehicle speed of the electric vehicle, a rotational speed of the motor, a current torque of the motor, a variable of the torque of the motor, and an acceleration of the electric vehicle, and
the acceleration is a variation value of the vehicle speed of the electric vehicle in the unit time, and the variable of the torque is a variation value of the current torque in the unit time.

10. The apparatus according to claim 9, wherein the object used to represent the relationship between the operating information of the electric vehicle and the corrected torque information comprises a first correspondence between the operating information and target torque information and a second correspondence between the target torque information, basic torque information, and the corrected torque information, and the target torque information comprises a target torque and a target torque variable, wherein the basic torque information is obtained through calculation in a current driving mode of the electric vehicle based on the value of the opening degree of the accelerator pedal and the gradient of the opening degree of the accelerator pedal, the basic torque information comprises a basic torque and a torque variable, and the basic torque variable is a variation value of the basic torque in a unit time; and
the determining unit is specifically configured to:
determine the target torque information based on the operating information and the first correspondence; and
determine the corrected torque information based on the target torque information, the basic torque information, and the second correspondence.

11. The apparatus according to claim 10, wherein the corrected torque information comprises corrected torque and a corrected torque variable, the corrected torque is a difference between the target torque and the current torque, and the corrected torque variable is a difference between the target torque variable and the torque variable; and
the processing unit is specifically configured to:
superpose the corrected torque and the basic torque to obtain first torque;
superpose the corrected torque variable and the basic torque variable to obtain a first torque variable; and
output the first torque and the first torque variable to the motor.

12. The apparatus according to claim 10, wherein the corrected torque information comprises a first corrected torque coefficient and a second corrected torque coefficient, the first corrected torque coefficient is a first ratio of a difference between the target torque and the current torque to the current torque, and the second corrected torque coefficient is a second ratio of a difference between the target torque variable and the torque variable to the torque variable; and
the processing unit is specifically configured to:
superpose the corrected torque and a torque value corresponding to the first correction coefficient, to obtain second torque;
superpose the corrected torque variable and a torque value corresponding to the second correction coefficient, to obtain a second torque variable; and
output the second torque and the second torque variable to the motor.

13. The apparatus according to any one of claims 10 to 12, wherein the processing unit is further configured to use the following steps to establish the object that is used to represent the relationship between the operating information of the electric vehicle and the corrected torque information:
for operating information at each historical moment of a plurality of historical operating parameters, when it is determined that the value of the opening degree of the accelerator pedal at the historical moment changes, recording an operating parameter at the historical moment and target torque that is of the electric vehicle and that corresponds to preset duration after the historical moment;
establishing the first correspondence by using the operating information at each historical moment and the target torque that is of the electric vehicle and that corresponds to the operating information at each historical moment; and
establishing the second correspondence by using the target torque that is of the electric vehicle and that corresponds to the operating information at each historical moment and basic torque information corresponding to each moment.

14. The apparatus according to claim 8 or 9, wherein the object that is used to represent the relationship between the operating information of the electric vehicle and the corrected torque information comprises a model that is used to represent the relationship between the operating information of the electric vehicle and the corrected torque information; and the determining unit is specifically configured to:
input the operating information into the trained model, and determining the corrected torque information based on an output result.

15. An electric vehicle torque control device, comprising at least one processor coupled to at least one memory, wherein
the at least one processor is configured to execute a computer program or instructions stored in the at least one memory, so that the torque control device performs the method according to any one of claims 1 to 7.

16. A readable storage medium, comprising a program or instructions, wherein when the program or the instructions are executed, the method according to any one of claims 1 to 7 is performed.

17. An electric vehicle, comprising a controller, a motor, and an accelerator pedal, wherein
the motor is configured to receive a control instruction of the controller, and rotate based on the received control instruction; and
the controller is configured to perform the method according to any one of claims 1 to 7.
